# EUROPEAN PATENT APPLICATION

(11) **EP 2 051 409 A1**
(43) Date of publication of application: **22.04.2009**
(21) Application number: 07792119.5
(22) Date of filing: 07.08.2007
(51) Int. Cl.: H04B 7/26, H04B 1/707, H04J 1/00, H04J 11/00, H04J 15/00, H04L 1/00, H04Q 7/36, H04Q 7/38

(54) **RADIO COMMUNICATION MOBILE STATION DEVICE AND RESOURCE ALLOCATION METHOD**

(30) Priority: 08.08.2006 JP 2006216149; 25.10.2006 JP 2006289423
(71) Applicant: Panasonic Corporation, Kadoma-shi Osaka 571-8501 (JP)
(72) Inventor: YOSHII, Isamu c/o Panasonic Corporation, Shiromi, Chuo-ku, Osaka 540-6207 (JP); NISHIO, Akihiko c/o Panasonic Corporation, Shiromi, Chuo-ku, Osaka 540-6207 (JP); FUKUOKA, Masaru c/o Panasonic Corporation, Shiromi, Chuo-ku, Osaka 540-6207 (JP); KURI, Kenichi c/o Panasonic Corporation, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/065450
(87) International publication number: WO 2008/018462

(57) **Abstract**

Provided is a mobile station capable of increasing the use efficiency of a transmission resource. The mobile station (100) includes: a line quality measuring unit (105) which measures SINR of a pilot symbol; a CQI generation unit (106) which generates a CQI corresponding to the SINR; and a resource allocation unit (107) allocates a subcarrier corresponding to the content of an inputted CQI among a plurality of subcarriers (i.e., a plurality of resources) to the CQI according to a common reference table in a plurality of mobile stations. Accordingly, in a plurality of mobile stations, the CQI having the same content are mapped to the same subcarrier.

## Description

### Technical Field

The present invention relates to a radio communication mobile station apparatus and a resource allocation method.

### Background Art

In the field of mobile communications, multimedia broadcast/multicast service (MBMS) is studied technically (e.g. see Non-patent Document 1). Communications carried out in MBMS is not point-to-point (P-to-P) communication but is point-to-multi (P-to-M) communication. That is, inMBMS, one radio communication base station apparatus (hereinafter simply the "base station") transmits data (i.e. MBMS data) to a plurality of radio communication mobile station apparatuses (hereinafter simply "mobile stations") at the same time.

MBMS includes broadcast mode and multicast mode. Broadcast mode refers to transmitting data to all mobile stations like current TV broadcasting and sound broadcasting, and multicast mode refers to transmitting data to only specific mobile stations subscribing to services such as newsgroups.

Currently, in mobile communications, studies are underway to apply MBMS to traffic information distribution service, music distribution service, news distribution service, sport broadcasting service and so on.

Meanwhile, studies are underway to apply adaptive modulation to MBMS data (e.g. see Non-patent Document 2). To perform adaptive modulation to the MBMS data, mobile stations need to transmit channel quality information such as CQIs (Channel Quality Indicator) as feedback information to a base station. The base station performs adaptive modulation of MBMS data based on CQIs from the mobile stations. Moreover, conventionally, CQIs transmitted from the mobile stations are carried out using different transmission resources prepared on a per mobile station basis.
Non-patent Document 1: 3GPP TS 22.146 V6.0.0 (2002-06): 3rd Generation Partnership Project; Technical Specification Group Services and System Aspects; Multimedia Broadcast/Multicast Service; Stage 1 (Release 6), June, 2002
Non-patent Document 2: 3GPP TSG-RAN-WG2 Meeting #52; R2-060955; Athens, Greece, 27th- 31st March 2006; Motorola

### Disclosure of Invention

### Problems to be Solved by the Invention

As described above, MBMS is point-to-multi communication, and so, if adaptive modulation is applied to MBMS data, a large number of mobile stations need to transmit CQIs. For this reason, due to CQI transmission, many transmission resources have to be used in uplink, and, therefore, the uplink data transmission efficiency deteriorates.

It is therefore an object of the present invention to provide a mobile station and a resource allocation method that improve transmission resource use efficiency. Means for Solving the Problem

The mobile station of the present invention adopts a configuration including: an allocating section that allocates one of a plurality of resources that are orthogonal to each other and that are common between a plurality of radio communication mobile station apparatuses, to transmission information according to a detail of the transmission information; and a transmitting section that transmits the transmission information using the allocated resource.

The resource allocation method of the present invention including: allocating one of a plurality of resources that are orthogonal to each other and that are common between a plurality of radio communication mobile station apparatuses, to transmission information according to a detail of the transmission information.

### Advantageous Effect of the Invention

The present invention provides an advantage of improving transmission resource use efficiency.

### Brief Description of Drawings

FIG.1 is a block diagram showing the configuration of the mobile station, according to resource allocation example 1 of Embodiment 1;
FIG.2 is a reference table the CQI generating section has, according to Embodiment 1;
FIG.3 shows subcarriers, according to resource allocation example 1 of Embodiment 1;
FIG.4 is the reference table that the resource allocation section has, according to resource allocation example 1 of Embodiment 1;
FIG.5 is a block diagram showing the configuration of the mobile station according to resource allocation example 2 of Embodiment 1;
FIG.6 shows time slots according to resource allocation example 2 of Embodiment 1;
FIG.7 is the reference table that the resource allocation section has, according to resource allocation example 2 of Embodiment 1;
FIG.8 is a block diagram showing the configuration of the mobile station according to resource allocation example 3 of Embodiment 1;
FIG.9 is the reference table that the resource allocation section has, according to resource allocation example 3 of Embodiment 1;
FIG.10 is a block diagram showing the configuration of the mobile station according to Embodiment 2;
FIG.11 is the reference table that the resource allocation section has, according to Embodiment 2;
FIG.12 is a block diagram showing the configuration of the mobile station, according to Embodiment 3;
FIG.13 the reference table that the resource allocation section has, according to Embodiment 3;
FIG.14 is a block diagram showing the configuration of the mobile station, according to Embodiment 4;
FIG.15 shows an order of transmission of CQIs, according to Embodiment 4;
FIG.16 shows the CQI transmission control, according to Embodiment 4;
FIG.17 shows the CQI transmission control, according to Embodiment 5;
FIG.18 is a block diagram showing the configuration of the mobile station, according to Embodiment 6;
FIG.19A shows CQI transmission control (where the CQIs of numbers increase), according to Embodiment 6;
FIG.19B shows CQI transmission control (where the CQIs of numbers decrease), according to Embodiment 6;
FIG.20 is a block diagram showing the configuration of the mobile station, according to Embodiment 7;
FIG.21 is the reference table that the resource allocation section has, according to Embodiment 7;
FIG.22 shows the order of transmitting error detection result information, according to Embodiment 7;
FIG.23 shows transmission control of the error detection result information, according to Embodiment 7;
FIG.24 is a block diagram showing the configuration of the mobile station, according to Embodiment 8; and
FIG.25 shows transmission control of the error detection result information, according to Embodiment 8.

### Best Mode for Carrying Out the Invention

Now, embodiments of the present invention will be described in detail with reference to the accompanying drawings.

### (Embodiment 1)

According to the present embodiment, transmission information from the mobile stations to the base station is CQI, the mobile stations allocate one of plurality of resources, which are orthogonal to each other and which are common between a plurality of mobile stations, to CQIs according to the details of the CQIs.

The resource allocation according to this embodiment will be explained using allocation examples 1 to 3.

### <Resource Allocation Example 1>

In this allocation example, a case will be explained where a plurality of resources, which are orthogonal to each other and which are common between a plurality of mobile stations, refer to a plurality of subcarriers, which are orthogonal to each other and form an OFDM symbol. That is, the mobile station according to this allocation example allocates a plurality of subcarriers, which are orthogonal to each other in the frequency domain and which are common between a plurality of mobile stations, to CQIs, according to the details of CQIs.

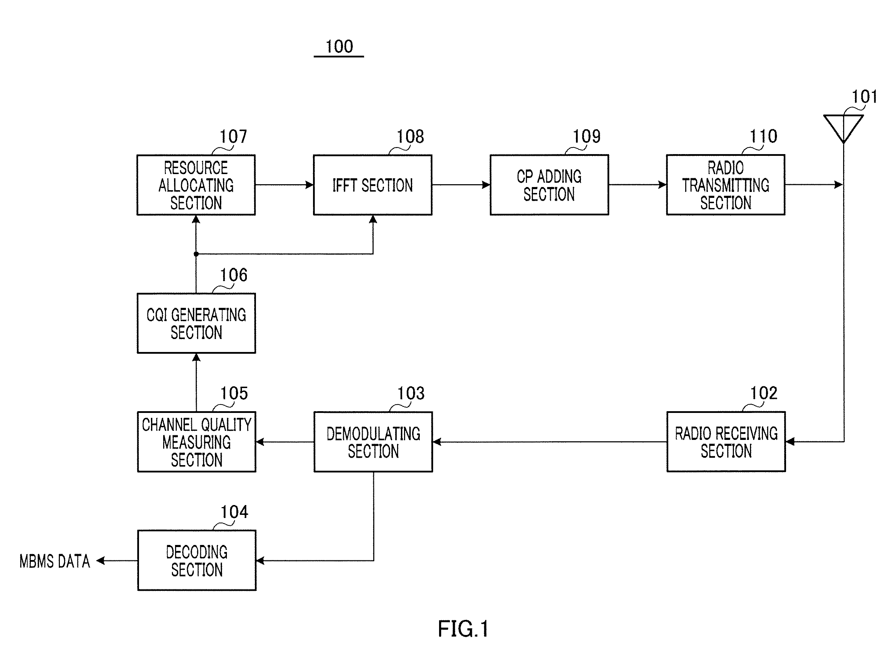

FIG.1 shows the configuration of mobile station 100 according to this allocation example.

In mobile station 100, radio receiving section 102 performs receiving processing including down-conversion and A/D conversion on a signal received via antenna 101, and outputs the signal to demodulating section 103. In the present embodiment, a signal received from the base station includes MBMS data, a pilot symbol, and a control signal designating an MCS (Modulation and Coding Scheme) of the MBMS data.

Modulating section 103 modulates the received signal, and outputs the pilot part of the received signal after modulation to channel quality measuring section 105 and the data part of the received signal after modulation to decoding section 104. At this time, modulating section 103 modulates the data part according to the MCS designated by the control signal.

Decoding section 104 decodes the MBMS data and outputs the decoded MBMS data.

Channel quality measuring section 105 measures the downlink signal channel quality using pilot symbols. Here, channel quality measuring section 105 measures the SINR (Signal to Interference and Noise Ratio) of the pilot symbol as downlink signal channel quality, and outputs the SINR to CQI generating section 106.

Channel quality measuring section 105 may also measure the SINR of the data part as channel quality. Further, channel quality measuring section 105 may measure channel quality using, for example, SNR, SIR, CINR, received power, interference power, bit error rate, and throughput and an MCS that achieves a predetermined error rate, instead of SINR.

CQI generating section 106 generates a CQI according to the SINR and outputs the generated CQI to resource allocating section 107 and IFFT (Inverse Fast Fourier Transform) section 108. Generation of a CQI will be described later in detail.

Upon inputting the CQI, resource allocating section 107 allocates subcarriers according to the detail of the CQI in a plurality of subcarriers (i.e. a plurality of resources), and outputs the allocation result to IFFT section108. The subcarrier allocationwill be described later in detail.

According to the allocation result, IFFT section 108 maps the CQI to the subcarriers allocated in resource allocating section 107 from a plurality of subcarriers, and performs an IFFT. This IFFT generates an OFDM symbol where CQIs are mapped to subcarriers. This OFDM symbol is inputted to CP (Cyclic Prefix) adding section 109.

CP adding section 109 attaches the same signal as the tail part of the OFDM symbol as a CP, to the beginning of the OFDM symbol, and outputs the OFDM symbol to radio transmitting section 110.

Radio transmitting section 110 performs transmitting processing including D/A conversion, amplification and up-conversion on the OFDM symbol after CP attachment, and transmits the OFDM symbol after CP attachment to the base station via antenna 101. That is, radio transmitting section 110 transmits the CQI using the resource allocated by resource allocating section 107.

Next, CQI generation and subcarrier allocation will be explained in detail.

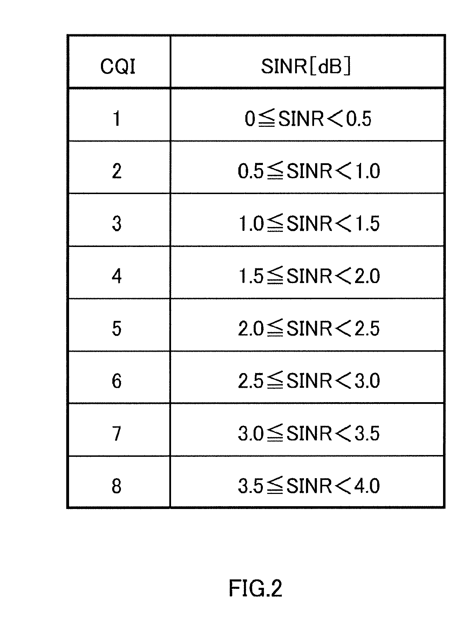

CQI generating section 106 has the reference table shown in FIG.2 and generates a CQI associated with the SINR based on this reference table. Here, the range of the SINR is classified into eight levels, and CQIs 1 to 8 are used in association with these eight levels of SINRs. That is, if, for example, an SINR of 1.2 [dB] is inputted from channel quality measuring section 105, CQI generating section 106 generates "CQI 3." The reference table shown in FIG.2 is used in common between a plurality of mobile stations.

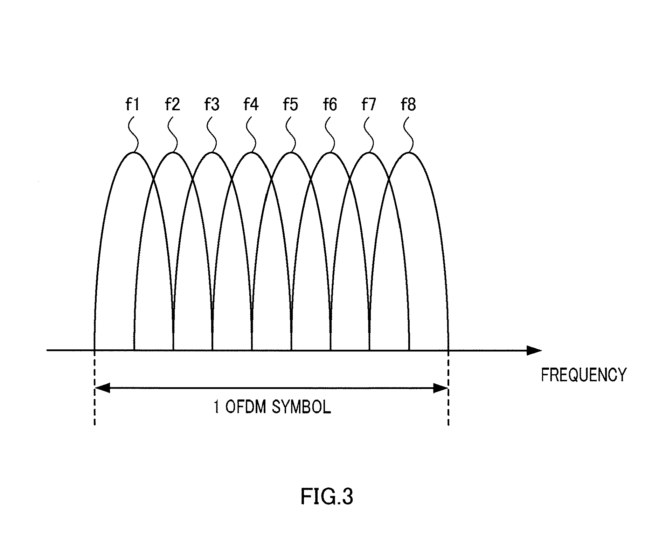

Further, the subcarrier allocation (i.e. resource allocation) according to this allocation example is carried out as follows. Here, as shown in FIG.3, one OFDM symbol is formed with subcarriers f1 to f8. The configuration of subcarriers of the OFDM symbol is the same between a plurality of mobile stations.

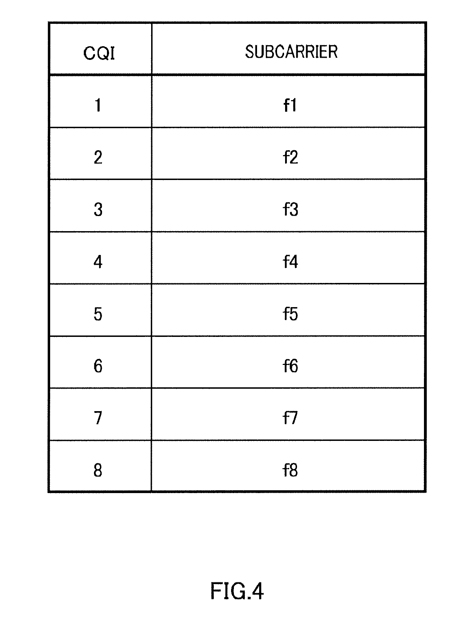

Resource allocating section 107 has the reference table shown in FIG.4 and allocates subcarriers according to the details of CQIs, based on this reference table. That is, when the CQI inputted from CQI generating section 106 is CQI 3, resource allocating section 107 allocates subcarrier f3 to CQI 3. As such, in this allocation example, the details of CQIs and subcarriers are associated. That is, in this allocation example, the details of transmission information and transmission resources in the frequency domain are associated.

Further, the reference table shown in FIG.4 is used in common between a plurality of mobile stations. That is, subcarrier f3 is allocated to CQI 3 between all of a plurality of mobile stations. Accordingly, CQIs of the same details are mapped to the same subcarriers in a plurality of mobile stations. In other words, the same transmission resources are allocated to transmission information of the same detail in a plurality of mobile stations.

The base station having received an OFDM symbol, in which CQIs are mapped to the subcarriers as such, performs adaptive modulation of MBMS data as follows.

The base station performs an FFT (Fast Fourier Transform) for an OFDM symbol after removing a CP, and takes out signals per subcarrier. Incidentally, an OFDM symbol received in the base station combines a plurality of OFDM symbols transmitted from a plurality of mobile stations in the channel (i.e. a combined OFDM symbol). That is, a plurality of CQIs of the same details reported from a plurality of mobile stations using the same subcarriers is detected as one CQI per subcarrier in the base station.

Next, the base station detects the CQI associated with the lowest SINR in CQIs 1 to 8 mapped to the subcarriers in the combined OFDM symbol. If CQI 3, CQI 5 and CQI 8 in CQIs 1 to 8 are included in the combined OFDM symbol, the base station detects CQI 3.

Then, the base station determines the MCS for MBMS data according to the detected CQI and performs adaptive modulation of the MBMS data using the determined MCS. Here, a CQI of smaller number, that is, a CQI associated with lower SINR is associated with an MCS of lower transmission rate.

To prevent wrong CQI detections due to influences such as noise, the base station may compare the SINRs of subcarriers of a combined OFDM symbol with a threshold value, and, may also detect a CQI with respect to a subcarrier alone where the SINRs are equal to or more than the threshold value.

In this way, according to this allocation example, CQIs of the same details between a plurality of mobile stations are transmitted using the same subcarriers, so that it is possible to improve transmission resource use efficiency in the frequency domain.

### <Resource Allocation Example 2>

In this allocation example, a case will be explained where a plurality of resources, which are orthogonal to each other and which are common between a plurality of mobile stations, refer to a plurality of time slots orthogonal to each other. That is, the mobile station according to this allocation example allocates plurality of time slots, which are orthogonal to each other in the time domain and which are common between a plurality of mobile stations, to CQIs, according to the details of CQIs.

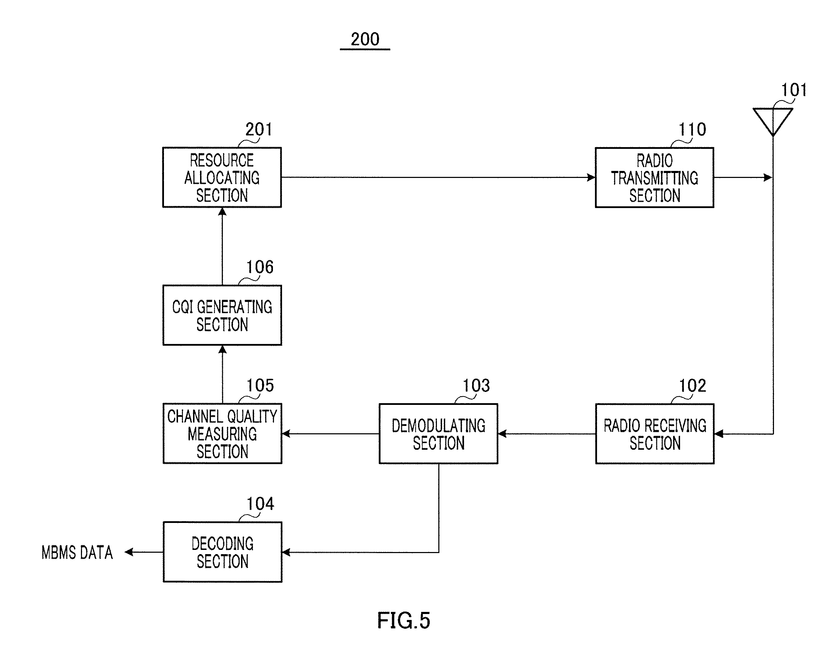

FIG.5 shows the configuration of mobile station 200 according to this allocation example. In FIG.5, the same components as shown in FIG.1 will be assigned the same reference numerals, and descriptions thereof will be omitted.

A CQI generated in CQI generating section 106 is inputted to resource allocating section 201.

Upon inputting the CQIs, resource allocating section 201 allocates time slots according to the detail of the CQI in a plurality of time slots (i.e. a plurality of resources), and outputs the time slots including the CQI to radio transmitting apparatus 110. The time slot allocation will be described later in detail.

Radio transmitting section 110 performs transmitting processing including D/A conversion, amplification and up-conversion on time slots, and transmits the time slots to the base station via antenna 101. That is, radio transmitting section 110 transmits a CQI using the resource allocated by resource allocating section 201.

Next, the time slot allocation will be explained in detail.

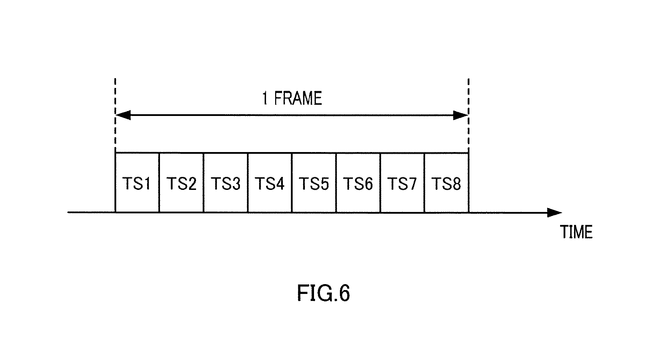

The time slot allocation (i.e. resource allocation) according to this allocation example is carried out as follows. Here, as shown in FIG. 6, one frame is formed with time slots TS 1 to TS 8. The configuration of time slots in the frame is the same between a plurality of mobile stations.

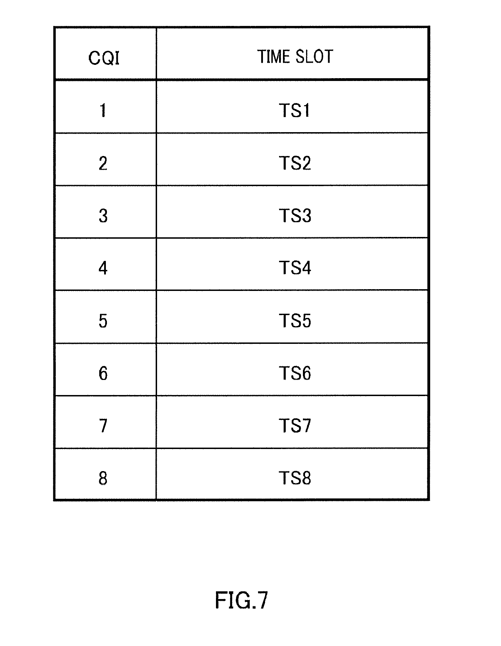

Resource allocating section 201 has the reference table shown in FIG.7 and allocates time slots according to the details of CQIs, based on this reference table. That is, when the CQI inputted from CQI generating section 106 is CQI 3, resource allocating section 201 allocates time slot TS 3 to CQI 3. As such, in this allocation example, the details of CQIs and time slots are associated. That is, in this allocation example, the details of transmission information and transmission resources in the time domain are associated.

Further, the reference table shown in FIG.7 is used in common between a plurality of mobile stations. That is, time slot TS 3 is allocated to CQI 3 between all of a plurality of mobile stations. Accordingly, CQIs of the same details are included in the same time slots in a plurality of mobile stations. In other words, the same transmission resources are allocated to transmission information of the same detail in a plurality of mobile stations.

On the other hand, the base station will perform adaptive modulation of MBMS data as described below.

The base station takes out signals per time slot from a received signal. Incidentally, a signal received in the base station combines a plurality of signals transmitted from a plurality of mobile stations in the channel (i.e. a combined signal). That is, a plurality of CQIs of the same details reported from a plurality of mobile stations using the same time slots are detected as one CQI per time slot in the base station.

Next, the base station detects the CQI associated with the lowest SINR in CQIs 1 to 8 included in the time slots in the combined signal. If CQI 3, CQI 5 and CQI 8 in CQIs 1 to 8 are included in the combined signal, the base station detects CQI 3. Processing after this is the same as in resource allocation example 1.

In this way, according to this allocation example, CQIs of the same details between a plurality of mobile stations are transmitted using the same time slots, so that it is possible to improve transmission resource use efficiency in the time domain.

### <Resource Allocation Example 3>

In this allocation example, a case will be explained where a plurality of resources, which are orthogonal to each other and which are common between a plurality of mobile stations, refer to a plurality of spreading codes orthogonal to each other. That is, the mobile station according to this allocation example allocates a plurality of spreading codes, which are orthogonal to each other in the space domain and which are common between a plurality of mobile stations, to CQIs according to the details of CQIs.

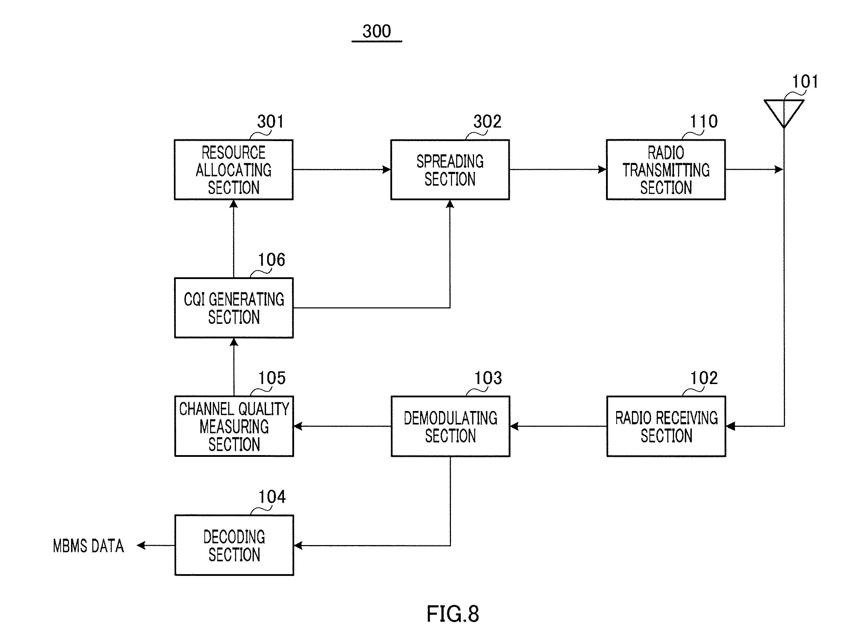

FIG.8 shows the configuration of mobile station 300 according to this allocation example. In FIG.8, the same components shown in FIG.1 will be assigned the same reference numerals, and descriptions thereof will be omitted.

A CQI generated in CQI generating section 106 is inputted to resource allocating section 301 and spreading section 302.

Resource allocating section 301 allocates the spreading code according to the detail of the CQI in a plurality of spreading codes (i.e. a plurality of resources), to the inputted CQI, and outputs the allocation result to spreading section 302. The spreading code allocation will be described later in detail.

According to the allocation result, spreading section 302 spreads the CQI by the spreading code allocated in resource allocating section 301 in a plurality of spreading codes, and outputs the CQI to radio transmitting section 110.

Radio transmitting section 110 performs transmitting processing including D/A conversion, amplification and up-conversion on the spread CQI, and transmits the CQI to the base station via antenna 101. That is, radio transmitting section 110 transmits the CQI using the resource allocated by resource allocating section 301.

Next, the spreading code allocation will be explained in detail. The spreading code allocation (i.e. resource allocation) according to this allocation example is carried out as follows.

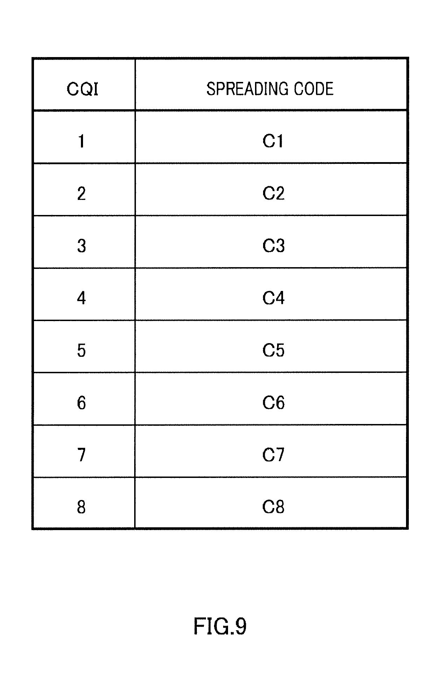

Resource allocating section 301 has the reference table shown in FIG.9 and allocates spreading codes according to the details of CQIs based on this reference table. That is, when the CQI inputted from CQI generating section 106 is CQI 3, resource allocating section 301 allocates spreading code C 3 to CQI 3. As such, in this allocation example, the details of CQIs and spreading codes are associated. That is, in this allocation example, the details of transmission information and transmission resources in the space domain are associated.

Further, the reference table shown in FIG.9 is used in common between a plurality of mobile stations. That is, spreading code C 3 is allocated to CQI 3 between all of a plurality of mobile stations. Accordingly, CQIs of the same details are spread by the same spreading codes in a plurality of mobile stations. In other words, the same transmission resources are allocated to transmission information of the same detail in a plurality of mobile stations.

On the other hand, the base station performs adaptive modulation for the MBMS data as described below.

The base station despreads a received signal by spreading codes C1 to C8 and takes out signals per spreading code. Incidentally, a signal received in the base station is combines a plurality of signals transmitted from a plurality of mobile stations in the channel (i.e. a combined signal). That is, a plurality of CQIs of the same details spread by the same spreading codes between a plurality of mobile stations and reported from a plurality of mobile stations, are detected as one CQI per spreading code in the base station.

Next, the base station detects the CQI associated with the lowest SINR in CQIs 1 to 8 per spreading code in the combined signal. If CQI 3, CQI 5 and CQI 8 in CQIs 1 to 8 are included in the combined signal, the base station detects CQI 3. Processing after this is the same as in resource allocation example 1.

In this way, according to this allocation example, CQIs of the same details between a plurality of mobile stations are spread and transmitted by the same spreading codes, so that it is possible to improve transmission resource use efficiency in the space domain.

Resource allocation examples 1 to 3 have been explained.

In this way, according to the present embodiment, the mobile stations allocate one of a plurality of resources, which are orthogonal to each other and which are common between a plurality of mobile stations, to a CQI, according to the detail of the CQI, so that it is possible to improve transmission resource use efficiency.

### (Embodiment 2)

With the present embodiment, a case will be explained where MIMO (Multi-Input/Multi-Output) communication is carried out between the mobile stations and the base station.

In MIMO communication, the transmitting side transmits different information (i.e. substreams) from a plurality of antennas and the receiving side separates a plurality of pieces of information combined in the channel to source information using channel estimation values (e.g. see Japanese Patent Application Laid-open No. 2002-44051). In MIMO communication, the receiving side receives the information transmitted from the transmitting side with antennas equal to or more than the number of antennas at the transmitting side, and, based on the pilot symbols inserted in the received signals received with the antennas, estimates channel characteristic H between the antennas. This channel characteristic (channel estimation value) H is represented by a 2 x 2 matrix, if there are two antennas at the transmitting side and two antennas at the receiving side. In MIMO transmission, the receiving side finds the information (i.e. substreams) transmitted from the antennas at the transmitting side based on an inverse matrix of channel characteristics H and the information received with the antennas. In the present embodiment, the mobile station serves as the information transmitting side, and the base station serves as the information receiving side in MIMO communication.

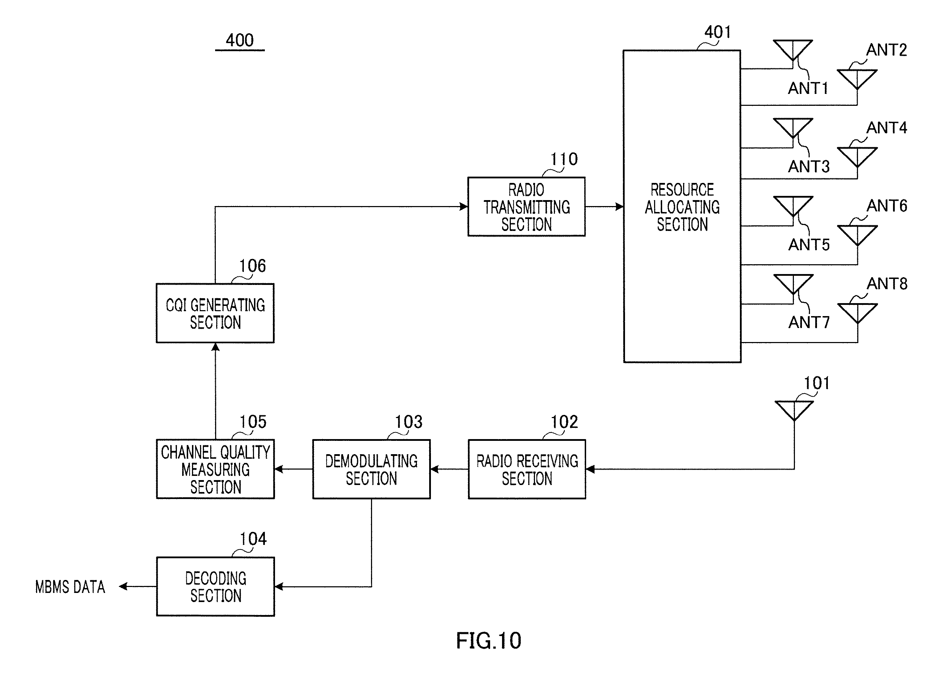

FIG.10 shows the configuration of mobile station 400 according to the present embodiment. In Fig.10, the same components as shown in FIG.1 will be assigned the same reference numerals, and descriptions thereof will be omitted.

CQIs generated in CQI generating section 106 are inputted to radio transmitting section 110.

Radio transmitting section 110 performs transmitting processing including D/A conversion, amplification and up-conversion on the CQIs, and outputs the CQIs after transmitting processing to resource allocating section 401.

Resource allocation section 401 allocates the inputted CQIs to the antennas associated with details of the CQIs in a plurality of antennas ANTs 1 to 8, and transmits the CQIs from the allocated antennas. The antenna allocation according to the present embodiment is carried out as follows.

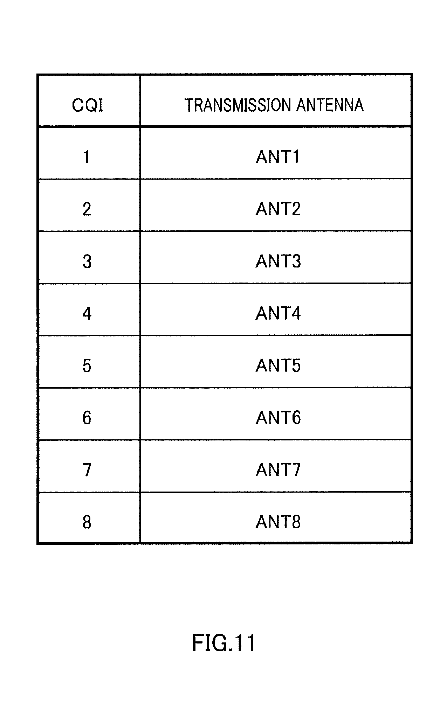

Resource allocating section 401 has the reference table shown in FIG.11 and allocates antennas according to the details of CQIs, based on this reference table. That is, when the CQI inputted from radio transmitting section 110 is CQI 3, resource allocating section 401 allocates antenna ANT 3 to CQI 3. As such, in the present embodiment, the details of CQIs and antennas are associated. That is, in the present embodiment, the details of transmission information and transmission resources in the space domain are associated.

Further, the reference table shown in FIG.11 is used in common between a plurality of mobile stations. That is, CQI 3 is allocated to antenna ANT 3 between all of a plurality of mobile stations. Accordingly, CQIs of the same details are transmitted from the same antennas in a plurality of mobile stations. In other words, the same transmission resources are allocated to transmission information of the same detail in a plurality of mobile stations.

On the other hand, the base station performs adaptive modulation of the MBMS data as described below.

The base station takes out signals per antenna at the mobile station side, from signals received with a plurality of antennas. Incidentally, a signal received in the base station is combines a plurality of signals transmitted from a plurality of mobile stations in the channel (i.e. a combined signal). That is, a plurality of CQIs of the same details reported from a plurality of mobile stations is detected as one CQI per antenna in the base station.

Next, the base station detects the CQI associated with the lowest SINR in CQIs 1 to 8 per antenna in the combined signal. If CQI 3, CQI 5 and CQI 8 in CQIs 1 to 8 are included in the combined signal, the base station detects CQI 3. Processing after this is the same as in resource allocation example 1 of Embodiment 1.

In this way, according to the present embodiment, CQIs of the same details between a plurality of mobile stations are transmitted using the same antennas, so that it is possible to improve transmission resource use efficiency in the space domain.

### (Embodiment 3)

According to the present embodiment, transmission information from the mobile stations to the base station is error detection result information, or, to be more specific, an ACK (ACKnowledgment) or a NACK (Negative ACKnowledgment), and mobile stations allocate plurality of resources, which are orthogonal to each other and which are common between a plurality of mobile stations, to error detection result information according to the details of error detection result information.

The resource allocation according to this embodiment will be explained below.

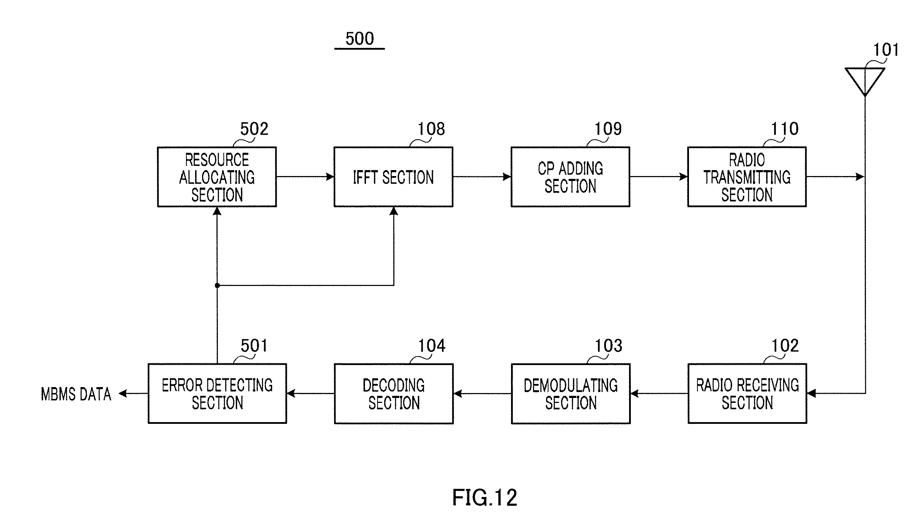

FIG.12 shows the configuration of mobile station 500 according to the present embodiment. In FIG.12, the same components as shown in FIG.1 will be assigned the same reference numerals, and descriptions thereof will be omitted.

Modulating section 103 modulates a received signal, and outputs the data part of the received signal after modulation, to decoding section 104. At this time, modulating section 103 modulates the data part according to the MCS designated by the control signal.

Decoding section 104 decodes the MBMS data and outputs the decoded MBMS data to error detecting section 501.

Error detecting section 501 performs error detection of the MBMS data by, for example, CRC (Cyclic Redundancy Check), to generate anACK or a NACK as detection result information. Error detection section 501 generates an ACK when there is no error in the MBMS data and a NACK when there is an error in the MBMS data. The error detection result information generated as such is inputted to resource allocation section 502 and IFFT section 108.

When there is no error in the MBMS data, error detection section 501 outputs the MBMS data without an error as received data. On the other hand, when there is an error in the MBMS data, error detection section 501 allows to output the MBMS data with an error as the received data, or discards the MBMS data with an error.

Upon inputting error detection result information, resource allocation section 502 allocates subcarriers according to the detail of error detection result information in a plurality of subcarriers (i.e. a plurality of resources), and outputs the allocation result to IFFT section 108. The subcarrier allocation will be described later in detail.

According to the allocation result, IFFT section 108 maps the error detection result information to subcarriers allocated in resource allocating section 502 from a plurality of subcarriers, to perform an IFFT. This IFFT generates an OFDM symbol where the error detection result information is mapped to the subcarriers. This OFDM symbol is inputted to CP adding section 109.

Next, the subcarrier allocation will be explained in detail. The subcarrier allocation (resource allocation) according to the present embodiment will be carried out as follows.

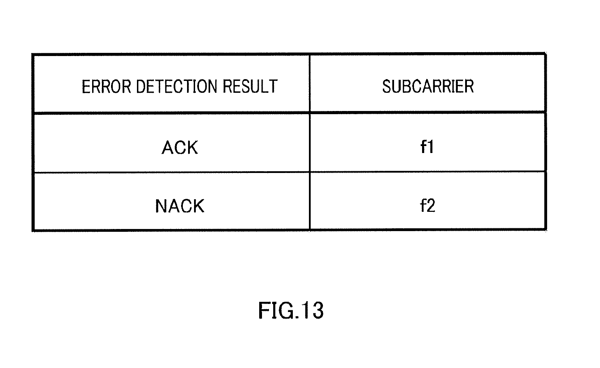

Resource allocating section 502 has the reference table shown in FIG.13 and allocates the subcarriers according to the details of error detection result information, based on this reference table. That is, when error detection result information inputted from error detecting section 501 is an ACK, resource allocating section 502 allocates subcarrier f1 to the ACK. On the other hand, when error detection result information inputted from error detecting section 501 is a NACK, resource allocating section 502 allocates subcarrier f2 to the NACK. As such, in the present embodiment, the details of error detection result information and subcarriers are associated. That is, in the present embodiment, the details of transmission information and transmission resources in the frequency domain are associated.

Further, the reference table shown in FIG.13 is used in common between a plurality of mobile stations. That is, subcarrier f1 is allocated to anACK and subcarrier f2 is allocated to a NACK between all of a plurality of mobile stations. Accordingly, error detection result information of the same details are mapped to the same subcarriers in a plurality of mobile stations. In other words, the same transmission resources are allocated to transmission information of the same detail in a plurality of mobile stations.

The base station having received an OFDM symbol, in which the error detection result information is mapped to the subcarriers as such, transmits MBMS data as follows.

The base station performs an FFT for an OFDM symbol after removing CPs, and takes out signals per subcarrier. Incidentally, an OFDM symbol received in the base station combines a plurality of OFDM symbols transmitted from a plurality of mobile stations in the channel (i.e. a combined OFDM symbol). That is, a plurality of pieces of error detection result information of the same details reported from a plurality of mobile stations using the same subcarriers are detected as one piece of error detection result information per subcarrier in the base station.

Next, the base station detects whether or not there is an ACK or NACK mapped to subcarriers f1 and f2 in the combined OFDM symbol.

Then, (1) when there is an ACK but there is no NACK, the base station transmits the next MBMS data. Further, (2) when there are both an ACK and a NACK, (3) when there is no ACK but there is a NACK and (4) when there is neither an ACK nor a NACK, the base station retransmits the MBMS data same as the MBMS data previous time.

Although an embodiment that improves transmission resource use efficiency in the frequency domain has been explained as in resource allocation example 1 of Embodiment 1, by allocating resources, as in resource allocation examples 2 and 3 and Embodiment 2, to the error detection result information, it is possible to improve transmission resource use efficiency in the frequency domain and in the space domain.

In this way, according to the present embodiment, mobile stations allocate a plurality of resources, which are orthogonal to each other and which are common between a plurality of mobile stations, to error detection result information according to the details of error detection result information, so that it is possible to improve transmission resource use efficiency.

### (Embodiment 4)

In MBMS, it is more desirable for all mobile stations in a cell to reliably receive MBMS data. For this reason, in MBMS, the base station normally performs adaptive modulation on MBMS data as reference to the mobile station of the poorest channel quality. That is, as described above, when receiving a plurality of different CQIs, the base station detects a CQI associated with the lowest SINR from received CQIs and determines the MCS for MBMS data according to the detected CQI. As described above, a CQI associated with a lower SINR correspond to an MCS of lower transmission rate, so that, by performing CQI detection as such by the base station, it is possible for all mobile stations in a cell to reliably receive MBMS data. In this way, in MBMS, where the base station receives a plurality of different CQIs, the base station only uses CQIs associated with the lowest SINR in the CQIs upon determining the MCS for MBMS data.

Then, with the present embodiment, a mobile station stops transmitting its CQI, if a CQI associated with a lower SINR than the SINR the CQI of the mobile station is associated with is transmitted from another mobile station prior to the mobile station.

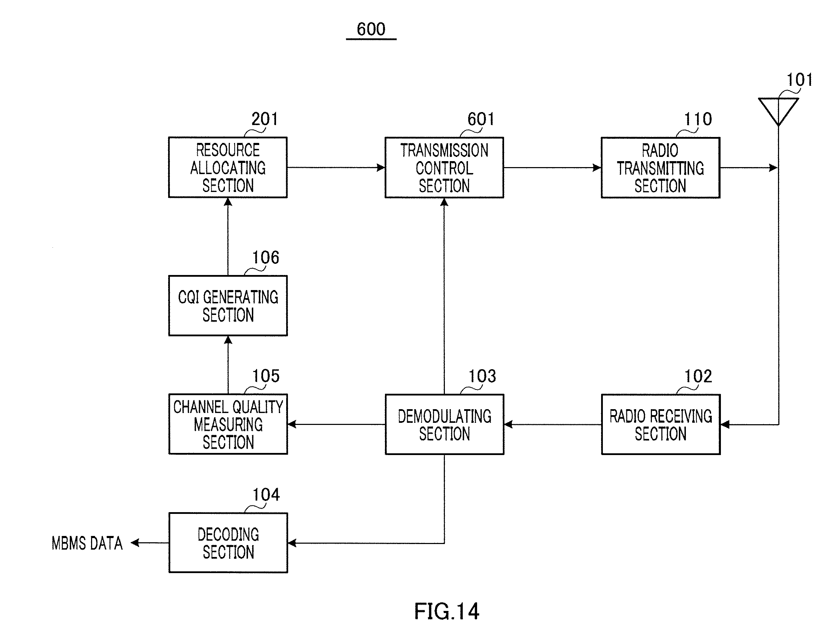

FIG.14 shows the configuration of mobile station 600 according to the present embodiment. In FIG.14, the same components as shown in FIG.5 will be assigned the same reference numerals, and descriptions thereof will be omitted.

Modulating section 103 modulates a received signal, and outputs the pilot part of the received signal after modulation to channel quality measuring section 105 and the data part of the received signal after modulation to decoding section 104. At this time, modulating section 103 modulates the data part according to the MCS designated by the control signal. At this time, modulating section 103 outputs the MCS designated by the control signal to transmission control section 601.

When there are CQIs 1 to 8 as described above, there are MCSs 1 to 8 corresponding to these CQIs, respectively. That is, transmission control section 601 is able to learn the CQI, which the base station used to determine the MCS for MBMS data, that is, the CQI the base station detected, from the MCS inputted from demodulating section 103.

Further, the CQI to which the time slot is allocated by resource allocating section 201, is inputted to transmission control section 601.

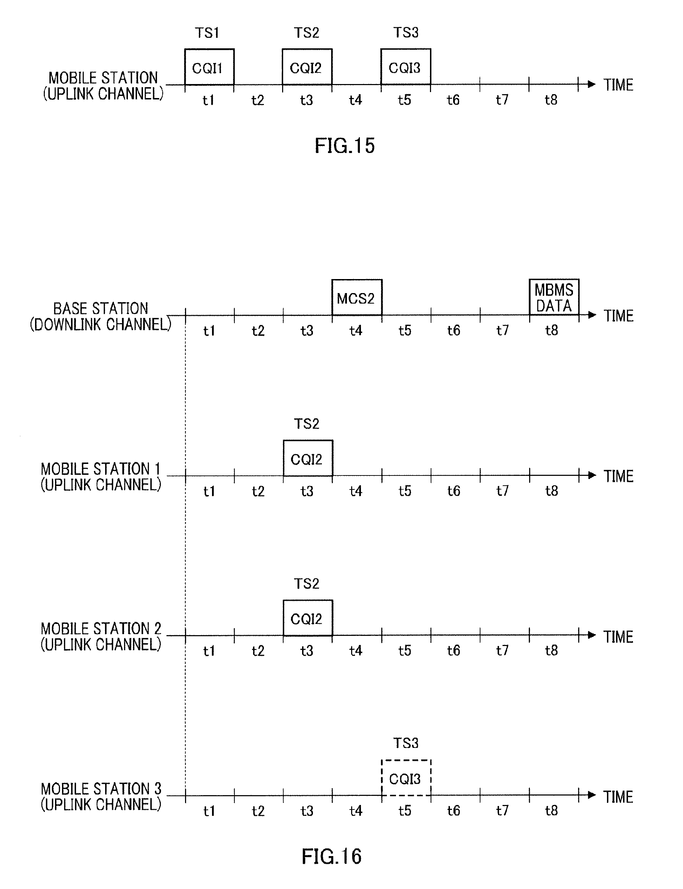

Here, in the present embodiment, as shown in FIG.15, the order of transmission of CQIs that the mobile station transmits in uplink, is determined in advance according to the details of the CQIs, and transmission control section 601 performs transmission control on the CQIs according to this order of transmission. As is clear from the order of transmission of CQIs 1, 2 and 3 in FIG. 15, in the present embodiment, the CQI associated with the lower SINR is transmitted earlier. Further, the order of transmission is set in advance in transmission control section 601 and shared between a plurality of mobile stations. That is, transmission control sections 601 of a plurality of mobile stations perform transmission control such that CQI 1 is transmitted at time t1, CQI 2 is transmitted at time t3 and CQI 3 is transmitted at time t5. That is, transmission control section 601 provides time intervals between time slot TS 1 including CQI 1, time slot TS 2 including CQI 2, and time slot TS 3 including CQI 3, and outputs the time slots including the CQIs to radio transmitting section 110.

Further, in the present embodiment, the base station reports the MCSs determined according to the CQIs detected as above, to all mobile stations at times t2, t4 and t6 immediately, after transmission times CQIs 1, 2 and 3 of t1, t3andt5. That is, the base station reports MCS 1 associated with CQI 1 at time t2, MCS 2 associated with CQI 2 at time t4 and MCS 3 associated with CQI 3 at time t6, to all mobile stations.

With Embodiments 1 to 3, explanations have been given using CQIs 1 to 8. However, for ease of explanation, an explanation will be given using CQIs 1 to 3 with the present embodiment. The same will apply to Embodiments 5 and 6 below.

Transmission control section 601 compares a CQI inputted from resource allocation section 201 (i.e. a CQI generated by CQI generating section 106) and the CQI which the base station uses to determine the MCS for MBMS data (i.e. the CQI associated with the MCS reported from the base station), and, from the comparison result, determines whether or not prior to the mobile station other mobile stations have transmitted a CQI associated with a lower SINR than the SINR the CQI of the mobile station is associated with.

As described above, in MBMS, when the base station receives a plurality of different CQIs, the base station only uses the CQI associated with the lowest SINR in the CQIs to determine the MCS for MBMS data. Accordingly, in the mobile stations, if, prior to the mobile station, other mobile stations transmit CQIs associated with lower SINRs than the SINR the CQI of the mobile station is associated with, the CQI of the mobile station is not used to determine the MCS in the base station, and therefore, it is useless transmitting the CQI of the mobile station.

Then, if, prior to the mobile station, other mobile stations transmit CQIs associated with lower SINRs than the SINR the CQI of the mobile station is associated with, transmission control section 601 controls to stop transmitting its CQI inputted from resource allocation section 201. To be more specific, in this case, transmission control section 601 discards the CQI inputted from resource allocation section 201 without outputting the CQI to radio transmitting section 110. Consequently, the CQI is not transmitted in this case.

On the other hand, if, prior to the mobile station, other mobile stations have not transmitted CQIs associated with lower SINRs than the SINR associated with the CQI of the mobile station, in other words, if there is a possibility that other mobile stations transmit CQIs associated with lower SINRs than the SINR associated with the CQI of the mobile station at the same time with the mobile station or after the mobile station, transmission control section 601 outputs the CQI inputted from resource allocating section 201 to radio transmitting section 110, to transmit the CQI.

The CQI transmission control according to the present embodiment will be explained more specifically using FIG.16. In FIG.16, a case is assumed where CQI 2 is generated in both mobile stations 1 and 2 and where CQI 3 is generated in mobile station 3.

In this case, mobile stations 1 to 3 do not transmit CQI 1 to the base station, and so there is no MCS 1 report from the base station to mobile stations 1 to 3. From the fact that MCS 1 is not reported at time t2, mobile station 1 learns that, prior to mobile station 1, the other mobile stations 2 and 3 have not transmitted CQI 1 associated with a lower SINR than the SINR associated with CQI 2 of mobile station 1. Similarly, mobile station 2 learns that, prior to mobile station 2, other mobile stations 1 and 3 have not transmitted CQI 1 associated with a lower SINR than the SINR associated with CQI 2 of mobile station 2. Then, by transmission control by transmission control sections 601, both mobile stations 1 and 2 transmit CQI 2 to the base station using time slot TS 2 at time t3.

In the order of transmission shown in FIG.15, the base station learns that the earliest received CQI in CQIs 1 to 3 is the CQI the lowest SINR is associated with, in the CQIs transmitted from mobile stations 1 to 3. Further, in FIG.16, the earliest received CQI in CQIs 1 to 3 by the base station is CQI 2. Then, the base station determines that MCS 2 associated with CQI 2 is the MCS for MBMS data transmitted at time t8 and reports MCS 2 to mobile stations 1 to 3 at time t4 using a downlink control signal.

Mobile station 3 having received the report of MCS 2 at time t4 learns that, by the report, prior to mobile station 3, other mobile stations 1 and 2 have transmitted CQI 2 associated with the lower SINR than the SINR CQI 3 of mobile station 3 is associated with. Then, mobile station 3 stops transmitting CQI 3 at time t5 by the transmission control of transmission control section 601.

In this way, according to the present embodiment, to stop transmitting CQIs that are not used to determine the MCS for MBMS data in the base station, it is possible to further improve transmission resource use efficiency without negative influence on MCS determination in the base station.

### (Embodiment 5)

In MBMS, as described above, when receiving a plurality of different CQIs, the base station detects a CQI associated with the lowest SINR from the received CQIs and determines the MCS for MBMS data according to the detected CQI. That is, to determine the MCS, in the base station, a CQI associated with a lower SINR is detected more often, and a CQI associated with a higher SINR is detected less often.

Then, according to the present embodiment, in accordance with the rate of detections in the base station, a mobile station makes a CQI associated with a lower SINR likely to be generated more frequently and makes a CQI associated with a higher SINR likely to be generated less frequently.

The configuration of the mobile station according to the present embodiment is the same as shown in FIG.5 and is different from Embodiment 1 only in generating CQIs in CQI generating section 106, and therefore will be explained only in this regard.

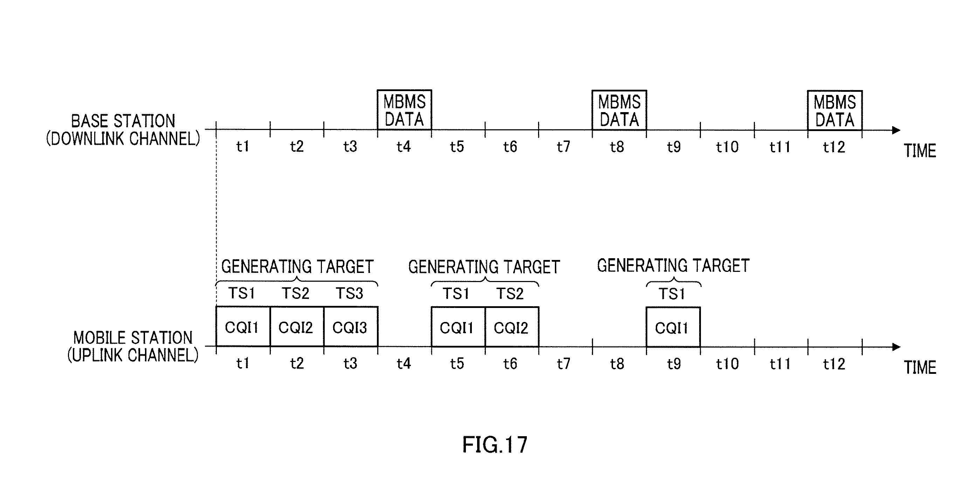

As shown in FIG.17, CQI generating section 106 according to the present embodiment generates a CQI for determining the MCS for the MBMS data transmitted from the base station at time t4 from CQIs 1 to 3. That is, any of CQIs 1 to 3 is generated in times t1 to t3 and transmitted to the base station.

Further, CQI generating section 106 generates a CQI for determining the MCS for the MBMS data transmitted from the base station at time t8 from CQIs 1 and 2. That is, in times t5 to t7, if there is a CQI associated with the SINR measured in channel quality measuring section 105, the associated CQI is generated and transmitted to the base station. However, if there is not a CQI associated with the SINR measured in channel quality measuring section 105 in CQIs 1 and 2, that is, if the SINR measured in channel quality measuring section 105 is associated with CQI 3, CQI generating section 106 does not generate a CQI. That is, in times t5 to t7, if the SINR measured in channel quality measuring section 105 is associated with CQI 3, the mobile station does not transmit a CQI to the base station.

Further, CQI generating section 106 generates a CQI from CQI 1 for determining the MCS for MBMS data transmitted from the base station at time t12. That is, in time t9 to t11, if CQI 1 is associated with the SINR measured in channel quality measuring section 105, CQI 1 is generated and transmitted to the base station. However, if CQI 1 is not associated with the SINR measured in channel quality measuring section 105, that is, if the SINR measured in channel quality measuring section 105 is associated with CQI 2 or CQI 3, CQI generating section 106 does not generate a CQI. That is, in times t9 to t11, if the SINRmeasured in channel qualitymeasuring section 105 is associated with CQI 2 or CQI 3, the mobile station does not transmit a CQI to the base station.

By repeating the above-described operations, the CQI generating section 106 makes CQIs associated with a lower SINR to be generated more frequently and makes CQIs associated with a higher SINR to be generated less frequently.

If the base station does not receive any of CQIs 1 to 3, the base station determines that the MCS for MBMS data is MCS 1 associated with CQI 1. This lowers transmission rate than MCS 2 an MCS 3, but enables all mobile stations in the cell to reliably receive MBMS data.

As such, the mobile station makes it possible to transmit CQIs less often that are less likely to be used to determine the MCS for MBMS data in the base station. Consequently, according to the present embodiment, it is possible to further improve transmission resource use efficiency without negative influence on MCS determination in the base station.

### (Embodiment 6)

There are a large number of mobile stations in a cell, so that, when a base station uses CQIs detected as described above upon determining the MCS for MBMS data, it is anticipated that the numbers assigned to CQIs used to determine the MCS rarely continue increasing or decreasing a plurality of times.

If, after the base station detects CQI 1 with respect to MBMS data 1, the base station detects CQI 2 with respect to MBMS data 2, it is anticipated that the base station rarely detects CQI 3 with respect to MBMS data 3 and is more likely to detect CQI 1 or CQI 2. On the other hand, if, after the base station detects CQI 3 with respect to MBMS data 1, the base station detects CQI 2 with respect to MBMS data 2, it is anticipated that the base station rarely detects CQI 1 with respect to MBMS data 3, and is likely to detect CQI 2 or CQI 3.

Then, with the present embodiment, if a CQI of an increased number is detected in the base station, the mobile station generates only CQIs of numbers not higher than that increased number, and, if a CQI of a decreased number is detected in the base station, the mobile station generates only CQIs of numbers not lower than that decreased number. As shown in FIG.2, the CQI of increased number is associated with a higher SINR, so that a case where a CQI of an increased number corresponds to a case where a SINR becomes higher, a case where a CQI of decreased number corresponds to a case where SINR becomes lower. That is, in other words, when a SINR associated with a CQI detected in the base station increases, the mobile station generates only a CQI associated with a SINR not higher than that increased SINR, and, when a SINR associated with a CQI detected in the base station decreases, the mobile station generates only a CQI associated with SINR not lower than that decreased SINR.

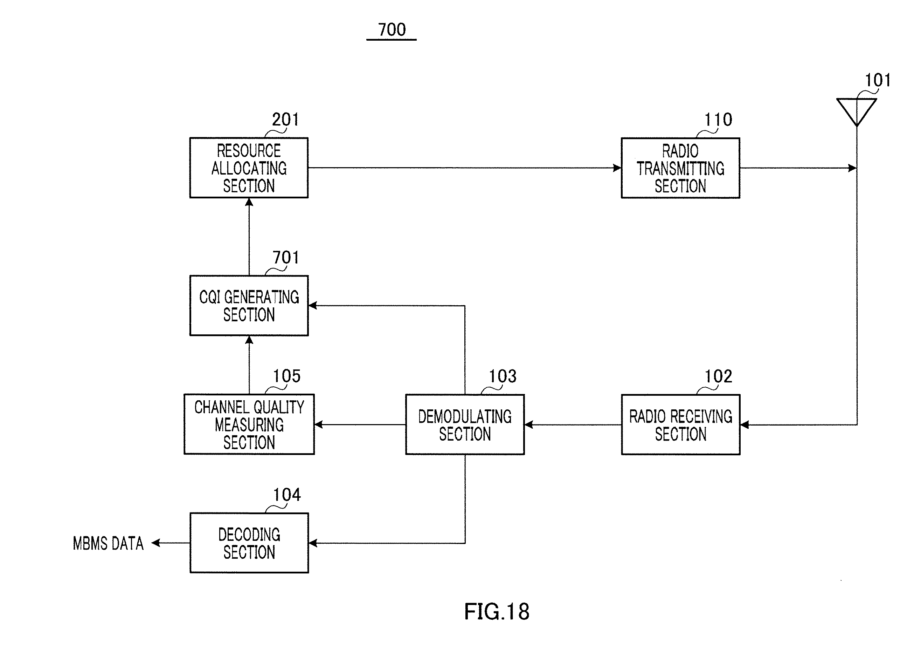

FIG.18 shows the configuration of mobile station 700 according to the present embodiment. In FIG.18, the same components as shown in FIG.5 will be assigned the same reference numerals, and descriptions thereof will be omitted.

Modulating section 103 modulates a received signal, and outputs the pilot part of the received signal after modulation to channel quality measuring section 105 and the data part of the received signal after modulation to decoding section 104. At this time, modulating section 103 modulates the data part according to the MCS designated by the control signal. Further, modulating section 103 outputs the MCS designated by a control signal to CQI generating section 701.

CQI generating section 701 is able to learn the CQI, which the base station used to determine the MCS for MBMS data, that is, the CQI the base station detected, from the MCS inputted from demodulating section 103. Then, CQI generating section 701 compares the MCS inputted previous time with the MCS inputted this time. Then, if, from the comparison result, it is determined that the number assigned to the CQI detected in the base station has increased, CQI generating section 701 generate only CQIs of numbers not higher than that increased number. On the other hand, if, from the comparison result, it is determined that the number assigned to the CQI detected in the base station has decreased, CQI generating section 701 generates only CQIs of numbers not lower than that decreased number.

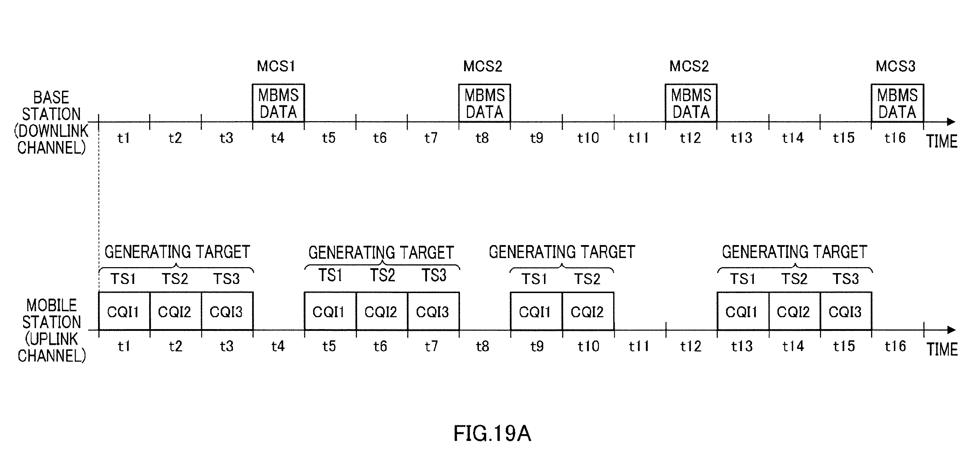

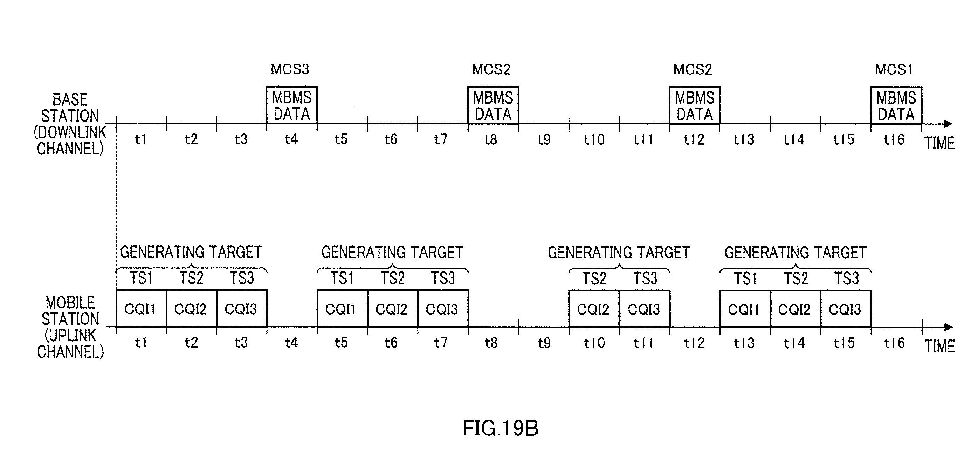

The CQI generation according to the present embodiment will be explained more specifically using FIGs. 19A and 19B. FIG. 19A shows where the CQIs of numbers increase, and FIG.19B shows where the CQIs of numbers decrease.

As shown in FIG.19A, when the MCS for MBMS data transmitted from the base station at time t4 is MCS 1 and the MCS for MBMS data transmitted from the base station at time t8 is MCS 2, CQI generating section 701 can determine that the number assigned to the CQI detected in the base station has increased. Then, CQI generating section 701 generates a CQI from CQIs 1 and 2 for determining the MCS for MBMS data transmitted from the base station at time t12. That is, in times t9 to t11, if there is a CQI associated with the SINR measured in channel quality measuring section 105 in CQIs 1 and 2, the associated CQI is generated and transmitted to the base station. However, if there is not a CQI associated with the SINR measured in channel quality measuring section 105 in CQIs 1 and 2, that is, if the SINR measured in channel quality measuring section 105 is associated with CQI 3, CQI generating section 701 does not generate a CQI. Accordingly, in times t9 to t11, if SINR measured in channel quality measuring section 105 is associated with CQI 3, the mobile station does not transmit the CQI to the base station. In this way, when the number assigned to the CQI detected in the base station increase, CQI generating section 701 generates only CQIs of numbers not higher than that increased number.

On the other hand, as shown in FIG.19B, when the MCS for MBMS data transmitted from the base station at time t4 is MCS 3, and when the MCS for MBMS data transmitted from the base station at time t8 is MCS 2, CQI generating section 701 can determine that the number assigned to the CQI detected in the base station has decreased. Then, CQI generating section 701 generates a CQI from CQIs 2 and 3 for determining the MCS for MBMS data transmitted from the base station at time t12. That is, in times t9 to t11, if there is the CQI associated with the SINR measured in channel quality measuring section 105 in CQIs 2 and 3, the associated CQI is generated and transmitted to the base station. However, if there is not a CQI associated with the SINR measured in channel quality measuring section 105 in CQIs 2 and 3, that is, if the SINR measured in channel quality measuring section 105 is associated with CQI 1, CQI generating section 701 does not generate a CQI. Accordingly, in times t9 to t11, if the SINR measured in channel quality measuring section 105 is associated with CQI 1, the mobile station does not transmit the CQI to the base station. In this way, when the number assigned to the CQI detected in the base station decrease, CQI generating section 701 generates only CQIs of numbers not lower than that decreased number.

As shown in FIGs.19A and 19B, when the MCS for MBMS data transmitted from the base station at time t8 is MCS 2 and the MCS for MBMS data transmitted from the base station at time t12 is MCS 2, CQI generating section 701 can determine that the number assigned to the CQI detected in the base station has not changed. Then, CQI generating section 701 generates a CQI for determining the MCS for MBMS data transmitted from the base station at time t16 from all of CQIs 1 to 3. That is, in times t13 to t15, any of CQIs 1 to 3 is generated and transmitted to the base station.

As such, the mobile station can stop transmitting CQIs that are less likely to be used to determine the MCS for MBMS data in the base station. Consequently, according to the present embodiment, it is possible to further improve transmission resource use efficiency without negative influence on MCS determination in the base station.

### (Embodiment 7)

In MBMS, it is preferable for all mobile stations in a cell to reliably receive MBMS data. For this reason, as described above, (1) when there is an ACK but there is not a NACK, the base station transmits the next MBMS data, and, (2) when there are both an ACK and a NACK, (3) when there is not an ACK but there is a NACK, and (4) when there is neither an ACK or a NACK, the base station retransmits the same MBMS data as the MBMS data previously transmitted. That is, only if one of a plurality of mobile stations transmits a NACK in response to the same MBMS data, the base station retransmits the MBMS data.

Then, in the present embodiment, in response to the same MBMS data, the mobile station stops transmitting an ACK from the mobile station when other mobile stations transmit a NACK before an ACK from the mobile station.

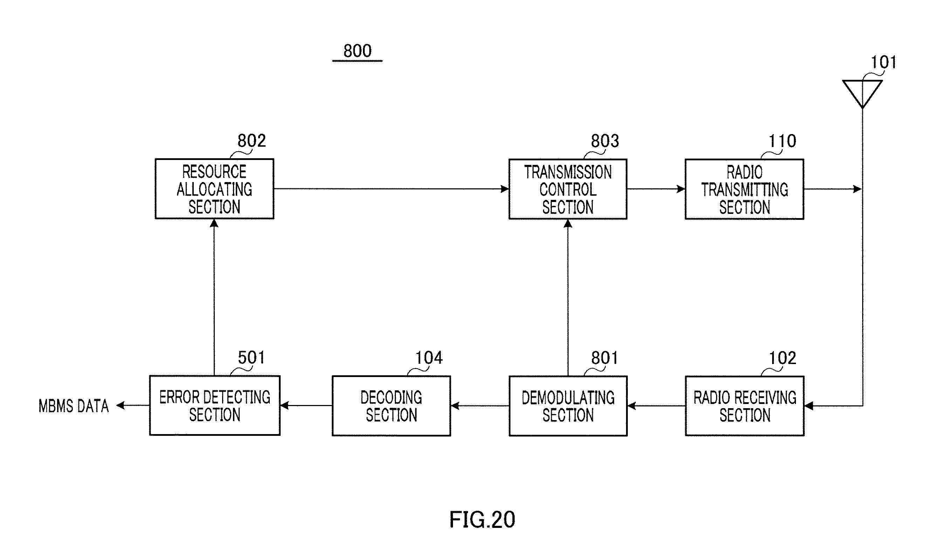

FIG.20 shows the configuration of mobile station 800 according to the present embodiment. In FIG.20, the same components as shown in FIG.12 will be assigned the same reference numerals, and descriptions thereof will be omitted.

In the present embodiment, a signal received from the base station includes MBMS data, a control signal designating the MCS for MBMS data, and a state report signal for reporting the mobile stations that the base station has received a NACK.

Modulating section 801 modulates a received signal, and outputs the data part of the received signal after modulation, to decoding section 104. At this time, modulating section 801 modulates the data part according to the MCS designated by the control signal. Further, modulating section 801 outputs the state report signal to transmission control section 803.

From error detection section 501, an ACK or a NACK is inputted to resource allocation section 802 as error detection result information.

Upon inputting the error detection result information, resource allocation section 802 allocates time slots according to the detail of the error detection result information from a plurality of time slots (i.e. a plurality of resources), and outputs the time slot including an ACK or a NACK to transmission control section 803.

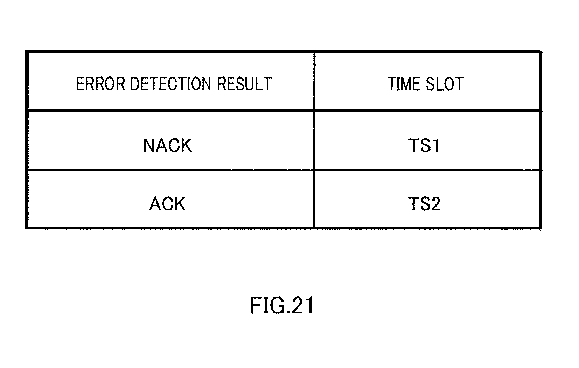

Resource allocating section 802 has the reference table shown in FIG.21 and allocates time slots according to the details of error detection result information, based on this reference table. That is, when the error detection result information inputted from error detecting section 501 is a NACK, resource allocating section 802 allocates time slot TS 1 to that NACK. On the other hand, when the error detection result information inputted from error detecting section 501 is an ACK, resource allocating section 802 allocates time slot TS 2 to that ACK.

Further, the reference table shown in FIG.21 is used in common between a plurality of mobile stations. That is, between all of a plurality of mobile stations, time slot TS 1 is allocated to the ACK and time slot TS 2 is allocated to the ACK.

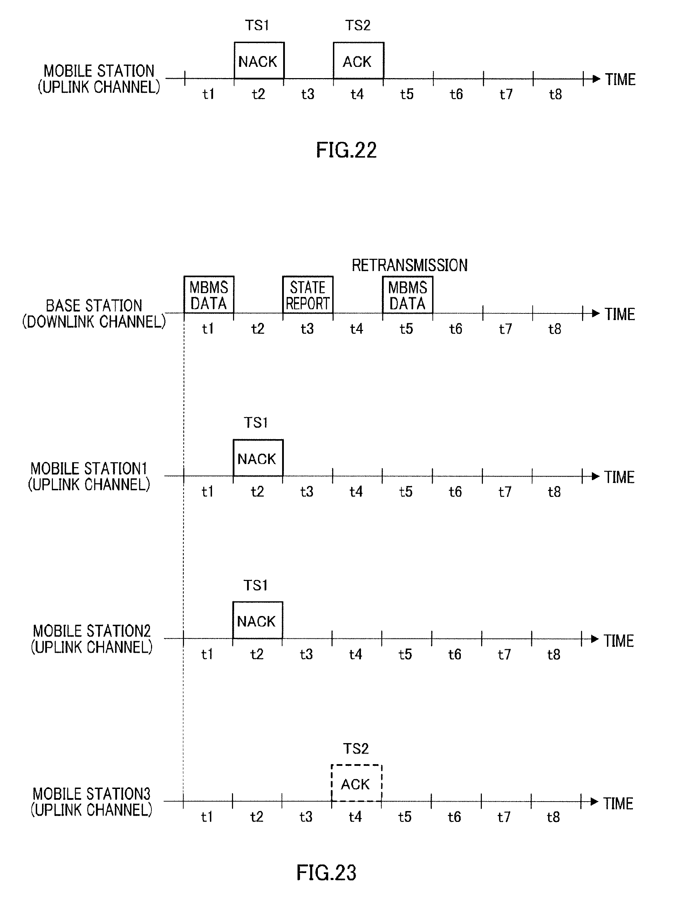

Here, in the present embodiment, as shown in FIG.22, the order of transmission of the error detection result information that the mobile station transmits in uplink, is determined in advance according to the details of the error detection result information, and transmission control section 803 performs transmission control on the error detection result information according to this order of transmission. As shown in FIG.22, in the present embodiment, a NACK is transmitted earlier than an ACK in response to the same MBMS data. Further, the order of transmission is set in advance in transmission control section 803 and shared between a plurality of mobile stations. That is, transmission control sections 803 of a plurality of mobile stations perform transmission control such that a NACK is transmitted at time t2, and an ACK is transmitted at time t4 in response to the same MBMS data. That is, transmission control section 803 provides time intervals between time slot TS 1 including a NACK and time slot TS 2 including an ACK, and outputs the time slots to radio transmitting section 110.

Further, in the present embodiment, upon receiving a NACK from one of the mobile stations, the base station transmits a state report signal reporting that event to all mobile stations at time t3 immediately after the NACK transmission time t2.

Depending on whether or not there is the state report signal, transmission control section 803 determines whether or not other mobile stations have transmitted a NACK earlier than an ACK from the mobile station.

As described above, in MBMS, upon receiving both an ACK and a NACK in response to the same MBMS data, the base station only uses the NACK. Accordingly, in the mobile stations, when other mobile stations have transmitted a NACK earlier than an ACK from the mobile station, it is useless transmitting the ACK from the mobile station.

Then, when other mobile stations have transmitted a NACK earlier than an ACK from the mobile station, transmission control section 803 controls to stop transmitting an ACK inputted from resource allocation section 802. To be more specific, in this case, transmission control section 803 discards the ACK inputted from resource allocation section 802 without outputting the ACK to radio transmitting section 110. Consequently, the ACK is not transmitted in this case.

On the other hand, when other mobile stations have not transmit a NACK earlier than an ACK from the mobile station, in other words, it is possible that other mobile stations transmit the ACK at the same time as the mobile station, transmission control section 803 outputs the ACK inputted from resource allocating section 802 to radio transmitting section 110 and makes radio transmitting section transmit the ACK.

The transmission control of error detection result information according to the present embodiment will be explained more specifically using FIG.23. In FIG.23, a case is assumed where, in response to the MBMS data transmitted from the base station at time t1, a NACK is generated in both mobile stations 1 and 2 and where an ACK is generated in mobile station 3.

In this case, a NACK is transmitted from both mobile stations 1 and 2 to the base station using time slot TS 1 at time t2.

Accordingly, at time t3, the state report signal is transmitted from the base station to mobile stations 1 to 3. By the state report signal, mobile station 3 learns that other mobile stations 1 and 2 have transmitted a NACK earlier than an ACK from mobile station 3. Then, mobile station 3 stops transmitting an ACK at time t4 by the transmission control of transmission control section 803.

The base station having received a NACK at time t2 retransmits MBMS data at time t5.

In this way, according to the present embodiment, to stop transmitting an ACK that is not used for retransmission control in the base station, it is possible to further improve transmission resource use efficiency without negative influence on retransmission control in the base station.

### (Embodiment 8)

In MBMS, as described above, (1) when there is an ACK but there is not a NACK, the base station transmits the next MBMS data, and, (2) when there are both an ACK and a NACK, (3) when there is not an ACK but there is a NACK, and (4) when there is neither an ACK nor a NACK, the base station retransmits the same MBMS data as the MBMS data previously transmitted. That is, when there is a NACK, the base station retransmits MBMS data whether or not there is an ACK. Further, as described above, in MBMS, it is desirable to make all mobile stations in a cell receive MBMS data surely. Consequently, although transmitting a NACK cannot be skipped, transmitting an ACK can be skipped.

Then, with the present embodiment, the mobile station makes an ACK likely to be generated as detection result information less frequently than a NACK.

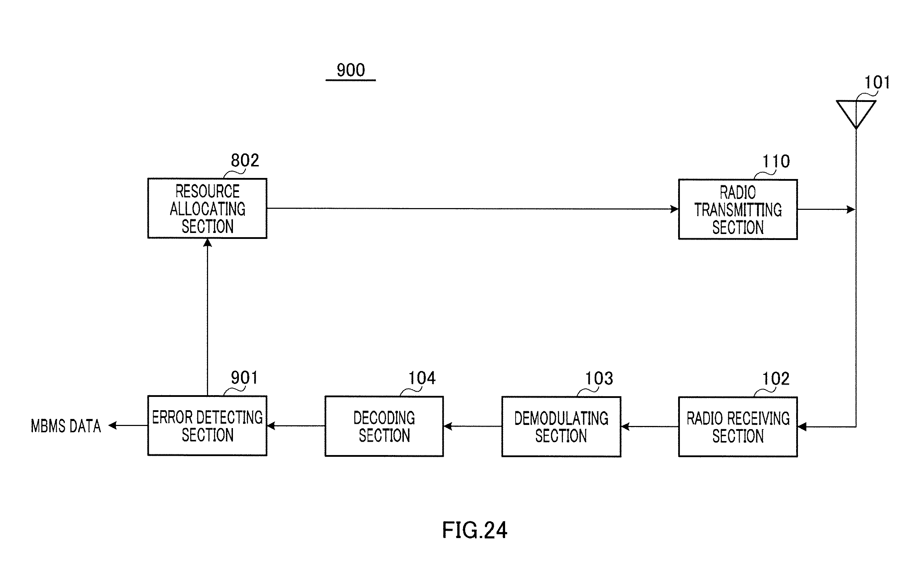

FIG.24 shows the configuration of mobile station 900 according to the present embodiment. In FIG.24, the same components as shown in FIG.12 or FIG.20 will be assigned the same reference numerals, and descriptions thereof will be omitted.

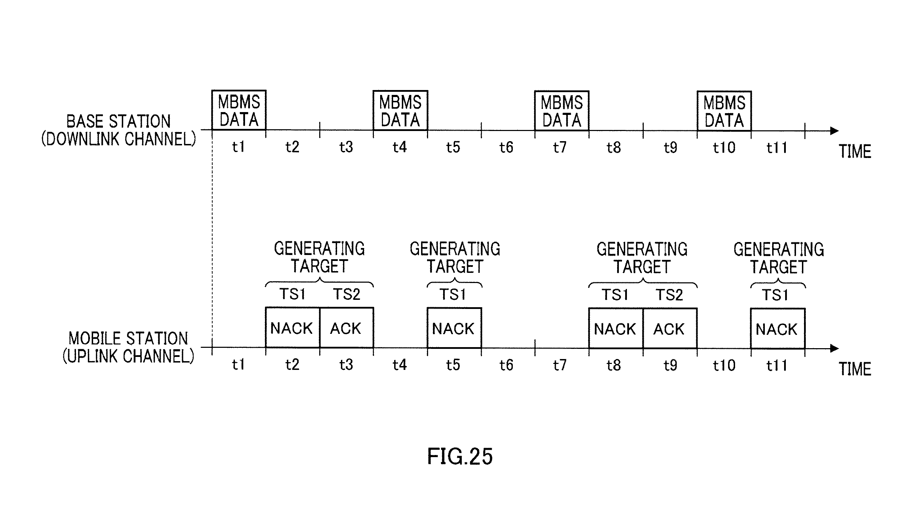

As shown in FIG.25, error detection section 901 in mobile station 900 generates error detection result information in both a NACK and an ACK in response to the MBMS data transmitted from base station at time t1. That is, in times t2 and t3, either a NACK or an ACK is generated and transmitted to the base station.

Further, error detection section 901 generates error detection result information in response to the MBMS data transmitted from base station at time t4, only from a NACK. That is, in times t5 and t6, there is a possibility that, a NACK as error detection result information is generated, yet there is no possibility that an ACK is generate, and, consequently, an ACK is not transmitted to the base station even when there is no error with MBMS data.

By repeating the operations described above, error detection section 901 repeats the above operations so that an ACK likely to be generated less frequently than a NACK.

As such, the mobile station makes it possible to transmit anACK less frequently than a NACK. Consequently, according to the present embodiment, it is possible to further improve transmission resource use efficiency without negative influence on retransmission control in the base station.

The embodiments of the present invention have been explained.

In the present description, "orthogonal" is synonymous with "separable." That is, in the present description, "a plurality of resources orthogonal to each other" refers to "a plurality of resources separable each other." Consequently, in the above embodiments, "orthogonal" may also be read "separable."

Further, although cases have been explained above with the embodiments about resource allocation with respect to information transmitting from the mobile station to the base station, that is, about uplink resource allocation, the present invention may be also applicable to resource allocation with respect to information transmitting from the base station to the mobile station, that is, downlink resource allocation.

Moreover, a CP may be referred to as a "guard interval (GI)." Furthermore, a subcarrier may be referred to as a "tone." Furthermore, the base station and the mobile station may be represented as "Node B" and "UE," respectively.

Moreover, although cases have been described with the embodiments above where the present invention is configured by hardware, the present invention may be implemented by software.

Each function block employed in the description of the aforementioned embodiment may typically be implemented as an LSI constituted by an integrated circuit. These may be individual chips or partially or totally contained on a single chip. "LSI" is adopted here but this may also be referred to as "IC," "system LSI, " "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No.2006-216149, filed on August 8, 2006, and Japanese Patent Application No.2006-289423, filed on October 25, 2006, including the specifications, drawings and abstracts, are incorporated herein by reference in their entirety.

### Industrial Applicability

The present invention is applicable to, for example, mobile communication systems.

## Claims

1. A radio communication mobile station apparatus, comprising:
an allocating section that allocates one of a plurality of resources that are orthogonal to each other and that are common between a plurality of radio communication mobile station apparatuses, to transmission information according to a detail of the transmission information; and
a transmitting section that transmits the transmission information using the allocated resource.

2. The radio communication mobile station apparatus according to claim 1, further comprising a generating section that generates a channel quality indicator according to channel quality,
wherein the allocating section allocates one of the plurality of resources to the channel quality indicator according to the detail of the channel quality indicator.

3. The radio communication mobile station apparatus according to claim 2, further comprising a transmission control section that, when, prior to said channel quality indicator, other radio communication mobile station apparatuses transmit a channel quality indicator associated with channel quality lower than the channel quality associated with said channel quality indicator, controls to stop transmitting the channel quality indicator.

4. The radio communication mobile station apparatus according to claim 2, wherein the generating section makes a channel quality indicator associated with higher channel quality less likely to be generated.

5. The radio communication mobile station apparatus according to claim 2, wherein the generating section:
when channel quality associated with a channel quality indicator detected in a radio communication base station apparatus increases, only generates a channel quality indicator associated with channel quality not higher than the increased channel quality; and
when channel quality associated with a channel quality indicator detected in the radio communication base station apparatus decreases, only generates a channel quality indicator associated with channel quality not lower than the decreased channel quality.

6. The radio communication mobile station apparatus according to claim 1, further comprising a detecting section that performs error detection on received data to generate detection result information,
wherein the allocating section allocates one of the plurality of resources to the detection result information according to a detail of the detection result information.

7. The radio communication mobile station apparatus according to claim 6, further comprising a transmission control section that controls to stop transmitting an acknowledgement when the acknowledgement is generated as the detection result information by the detecting section and another radio communication mobile station apparatus transmits a negative acknowledgement before the acknowledgement.

8. The radio communication mobile station apparatus according to claim 6, wherein the detecting section makes an acknowledgement likely to be generated as the detection result information less frequently than a negative acknowledgement.

9. The radio communication mobile station apparatus according to claim 1, wherein the plurality of resources comprise a plurality of subcarriers orthogonal to each other.

10. The radio communication mobile station apparatus according to claim 1, wherein the plurality of resources comprise a plurality of time slots orthogonal to each other.

11. The radio communication mobile station apparatus according to claim 1, wherein the plurality of resources comprise a plurality of spreading codes orthogonal to each other.

12. A resource allocation method comprising allocating one of a plurality of resources that are orthogonal to each other and that are common between a plurality of radio communication mobile station apparatuses, to transmission information according to a detail of the transmission information.
